# EUROPÄISCHE PATENTSCHRIFT

(11) **EP 2 022 295 B1**
(45) Veröffentlichungstag und Bekanntmachung des Hinweises auf die Patenterteilung: **16.07.2014**
(21) Anmeldenummer: 07728715.9
(22) Anmeldetag: 02.05.2007
(51) Int. Cl.: H05B 33/08, H02M 3/158

(54) **BELEUCHTUNGSSYSTEM UND VERFAHREN ZUM BETREIBEN EINES BELEUCHTUNGSSYSTEMS**
LIGHTING SYSTEM AND METHOD FOR OPERATING A LIGHTING SYSTEM
SYSTEME D'ECLAIRAGE ET PROCEDE DE FONCTIONNEMENT D'UN SYSTEME D'ECLAIRAGE

(30) Priorität: 16.05.2006 EP 06010104
(43) Veröffentlichungstag der Anmeldung: 11.02.2009
(73) Patentinhaber: OSRAM GmbH, 80807 München (DE)
(72) Erfinder: HUBER, Andreas, 82216 Maisach (DE); HYING, Ralf, 81827 München (DE); SCHALLMOSER, Oskar, 85521 Ottobrunn (DE)
(86) Internationale Anmeldenummer: PCT/EP2007/054261
(87) Internationale Veröffentlichungsnummer: WO 2007/131878

(56) Entgegenhaltungen:
- WO-A1-01/69980
- US-A- 5 936 599
- US-A- 5 977 753
- US-A1- 2004 036 418
- US-A1- 2004 196 225
- US-A1- 2004 212 321
- US-A1- 2005 218 838
- US-B1- 6 369 525
- US-B1- 6 528 954
- US-B1- 6 618 031

## Beschreibung

### Technisches Gebiet

Die vorliegende Erfindung betrifft ein Beleuchtungssystem mit einer ersten Lichtquelle, welche zur Erzeugung von Lichtsignalen einer ersten Farbe ausgebildet ist, und zumindest einer zweiten Lichtquelle, welche zur Erzeugung von Lichtsignalen einer zweiten Farbe ausgebildet ist, wobei die Lichtquellen zur Erzeugung einer vorgebbaren Farbsequenz ansteuerbar sind. Die Erfindung betrifft auch ein Verfahren zum Betreiben eines derartigen Beleuchtungssystems.

### Stand der Technik

Bei Beleuchtungssystemen wie Bildprojektionssystemen ist es bekannt, dass ein DLP (Digital Light Processing) -Chip zur Erzeugung von Bildfolgen eingesetzt wird. Dieser DLP-Chip kann jedoch nur Graustufenbilder erzeugen. Um eine farbige Darstellung erreichen zu können, ist es erforderlich, dass die eingesetzte Lichtquelle des Bildprojektionssystems verschiedenfarbiges Licht in schneller Abfolge erzeugt. Ist die Lichtquelle als HID (High Intensity Discharge) -Lampe ausgebildet und zur Erzeugung weißen Lichts vorgesehen, so ist es erforderlich, dass ein sogenanntes Farbrad zur Erzeugung des verschiedenenfarbigen Lichts eingesetzt wird. Dieses Farbrad besteht aus mehreren durchsichtigen Farbfiltern, die durch Rotation des Farbrades die gewünschte Farbsequenz erzeugen. Unter einer Farbsequenz wird dabei die zeitliche und/oder örtliche Änderung von einer auf einer Projektionsfläche dargestellten Farbwiedergabe oder Farbabfolge verstanden. Beispielsweise kann diese Farbsequenz bei einem Bildprojektionssystem auf einem Display, beispielsweise einem LCD (Liquid Crystal Display) -Display oder einer DLP-Anzeige erfolgen. Die Anzeige einer derartigen Farbsequenz kann jedoch auch auf einer anderen Projektionsfläche oder einer anderen Anzeige erfolgen.

Aus der US 6 618 031 B1 ist eine Vorrichtung und ein Verfahren für die unabhängige Steuerung der Helligkeit und der Farbebalance in einem Videoprojektionsapparat bekannt, bei dem die LEDs gemeinsam an eine Sromversorgungseinrichtung angeschlossen sind.

Aus der US 2004/0036418 A1 ist eine Stromregelschleife zur unabhängigen Stromregelung verschiedener LED-Gruppen bekannt.

Aus der US 2004/0196225 A1 ist eine Schaltungsanordnung für einen Videoprojektionsapparat bekannt, bei der LED Gruppen einen auf eine Stromversorgungseinheit geschaltet werden, um eine unabhängige Farbsteuerung zu erreichen.

Um eine derartige Farbsequenz auch mit Leuchtdioden zu erhalten, welche jeweils zur Erzeugung von Lichtsignalen einer individuellen Farbe ausgebildet sind, werden diese Leuchtdioden sequenziell ein- und ausgeschaltet. Dazu wird jede Leuchtdiode über eine eigene separate Steuereinheit betrieben. Die bekannten Vorgehensweisen und Ausgestaltungen sind relativ aufwändig konzipiert und können nicht in allen Fällen eine ausreichende Darstellung der gewünschten Farbsequenz ermöglichen.

### Darstellung der Erfindung

Der vorliegenden Erfindung liegt deshalb die Aufgabe zu Grunde, ein Beleuchtungssystem sowie ein Verfahren zum Betreiben des Beleuchtungssystems zu schaffen, mit welchem die Darstellung von Farbsequenzen verbessert werden kann.

Diese Aufgabe wird durch ein Beleuchtungssystem, welches die Merkmale nach Patentanspruch 1 aufweist, gelöst.

Ein erfindungsgemäßes Beleuchtungssystem umfasst eine erste Lichtquelle, welche zur Erzeugung von Lichtsignalen einer ersten Farbe ausgebildet ist und zumindest eine zweite Lichtquelle, welche zur Erzeugung von Lichtsignalen einer zweiten Farbe ausgebildet ist. Die Lichtquellen sind zur Erzeugung einer vorgebbaren Farbsequenz ansteuerbar. Ein wesentlicher Gedanke der Erfindung besteht darin, dass die Lichtquellen des Beleuchtungssystems, insbesondere alle Lichtquellen, durch eine gemeinsame einzige Steuereinheit betreibbar und durch diese eine Steuereinheit in der für die Erzeugung vorgebbaren Farbsequenz erforderlichen Art und Weise, insbesondere in der erforderlichen Reihenfolge, ansteuerbar sind. Dadurch kann ein Beleuchtungssystem geschaffen werden, welches mit vermindertem Aufwand eine optimale Ansteuerung von mehreren Lichtquellen im Hinblick auf die Erzeugung einer gewünschten Farbsequenz ermöglicht. Das Beleuchtungssystem kann dadurch kompakter und kostengünstiger realisiert werden. Indem alle Lichtquellen durch eine gemeinsame Steuereinheit individuell ansteuerbar sind, kann auch die Genauigkeit der erzeugten Lichtintensität in ihrem zeitlichen Verlauf und damit auch die Bildqualität verbessert werden und komplexe Farbsequenzen präzise erzeugt werden.

Erfindungsgemäß sind die Lichtquellen parallel geschaltet und über einen ersten Schaltungsknoten zur Energieversorgung mit einer Energieversorgungseinheit, insbesondere einer Stromquelle, elektrisch verbunden. Bevorzugt ist die Stromquelle zur Bereitstellung zumindest eines elektrischen Stroms mit dominantem Gleichanteil oder zur Bereitstellung eines Gleichstroms ausgebildet.

Erfindungsgemäß umfasst das Beleuchtungssystem auch eine Reglereinheit zur Regelung der Energieversorgungseinheit, welche mit der Steuereinheit verbunden ist. Die Steuereinheit ist bevorzugt zur Vorgabe einer Soll-Energieabgabe der Energieversorgungseinheit, insbesondere der Stromquelle, sowie einer Schaltfrequenz zum Ein- und Ausschalten der Energieversorgungseinheit ausgebildet, wobei diese beiden Vorgabeparameter an die Reglereinheit übertragbar sind. Erfindungsgemäß ist die Energieversorgungseinheit als Stromquelle ausgebildet, als Tiefsetzsteller oder als Buck-Converter ohne Filterkondensator konzipiert. Damit ist ein schneller Wechsel von einer individuellen Farbe zur nächsten innerhalb einer Farbsequenz möglich.

Damit hochfrequente Spannungsschwankungen am Ausgang der Energieversorgungseinheit gedämpft werden, kann parallel zum Ausgang der Energieversorgungseinheit ein Filterkondensator geschaltet sein. Diese Maßnahme unterdrückt Funkstörungen. Ein Filterkondensator verhindert jedoch ein schnelles Umschalten des Stromes, den die Energieversorgungseinheit liefert. Bei der Anwendung des Beleuchtungssystem in oben beschriebenen Bildprojektionssystemen ist jedoch häufig eine kontrastreiche Farbsequenz gefordert. Versuche haben ergeben, dass zur Dimensionierung des Filterkondensators folgende Regel gilt:
Zunächst wird ein Maximalstrom Imax durch den Strom definiert, den die Energieversorgungseinheit (1) abgibt, wenn das Beleuchtungssystem eine für das Beleuchtungssystem spezifizierte maximale Lichtstärke erzeugt.
Durch diesen Maximalstrom Imax liegt ein oberer Grenzwert für den Filterkondensator fest. Der Kapazitätswert des Filterkondensators gemessen in Mikrofarad muß kleiner sein als der Wert des Maximalstroms gemessen in Ampère

Die Lichtquellen des Beleuchtungssystems sind erfindungsgemäß jeweils in parallel zueinander geschalteten Signalpfaden geschaltet, wobei zumindest eine Lichtquelle in dem entsprechenden Signalpfad in Reihe zu einem Schalter geschaltet ist, und die Schalter mittels der Steuereinheit zum Öffnen oder Schließen ansteuerbar sind. Es kann auch vorgesehen sein, dass bei einer Mehrzahl N an Lichtquellen des Beleuchtungssystems, eine Anzahl N-1 jeweils in Reihe zu einem zugeordneten Schalter in dem entsprechenden Signalpfad geschaltet sind. Lediglich eine der Lichtquellen weist keine Reihenschaltung zu einem Schalter auf. Bei einer derartigen Ausführung weist die Lichtquelle, welche nicht in Reihe zu einem Schalter geschaltet ist, die größte Flussspannung im Vergleich zu den weiteren Lichtquellen des Beleuchtungssystem auf. Bei einer Ausgestaltung, bei der lediglich eine Anzahl N-1 von Lichtquellen jeweils in Reihe zu einem Schalter geschaltet ist, ist somit bevorzugt die Lichtquelle, welche keine Reihenschaltung zu einem Schalter aufweist, diejenige mit der höchsten charakteristischen Arbeitsspannung. Durch eine derartige Ausgestaltung kann in bauteilarmer Weise ein sicheres Betreiben der Lichtquellen ermöglicht werden und es ist lediglich eine Steuereinheit und ein einfach konzipierte Schalter, insbesondere Halbleiterschalter, erforderlich, wodurch das Gesamtsystem kostengünstiger und auch platzoptimiert ausgebildet werden kann.

Vorzugsweise sind abhängig von den Stellungen der Schalter die Betriebszustände der einzelnen Lichtquellen vorgebbar.

Bevorzugt sind diese Schalter mit einem zweiten Schaltungsknoten verbunden. Das Beleuchtungssystem bzw. die Schaltungsanordnung umfassend die mehreren Lichtquellen, welche Lasten darstellen, sind somit alle mit einem ersten gemeinsamen Schaltungsknoten verbunden, über welchen eine Energieversorgung, insbesondere eine Stromversorgung, bereitstellbar ist, wobei wiederum in Reihe dazu geschaltete Schalter mit dem zweiten Schaltungsknoten verbunden sind, durch welchen die Rückleitung der Energie, insbesondere des elektrischen Stroms, zu der Energieversorgungseinheit, insbesondere der Stromquelle, bewerkstelligbar ist. Die einzelnen Schalter, welche insbesondere im Falle einer Energieversorgung über eine Stromquelle als Stromventile bezeichnet werden können, können über die Steuereinheit derart geöffnet und geschlossen werden, dass ein sicheres und fehlerfreies Schalten ermöglicht werden kann, obwohl jedes einzelne der Stromventile bzw. jeder einzelne Schalter über die ihm zugeordnete Last bzw. über die ihm zugeordnete Lichtquelle in Serie zu dieser Energieversorgungseinheit bzw. der Stromquelle liegt.

Vorzugsweise ist zwischen den beiden Schaltungsknoten zumindest ein Kondensator bzw. ein Entlastungskondensator für die steuerbaren Schalter geschaltet. Es kann auch vorgesehen sein, dass jedem Schalter ein derartiger Kondensator parallel geschaltet ist. Bevorzugt kann vorgesehen sein, dass alle Verbindungsknoten zwischen den Lichtquellen und den zugeordneten Schaltern durch ein symmetrisches oder asymmetrisches Netzwerk aus derartigen Kondensatoren verbunden sind.

Bevorzugt ist abgesehen von relativ kurzen Kommutierungsintervallen immer stets mindestens eines der besagten Stromventile bzw. einer der Schalter leitfähig geschaltet und somit geschlossen.

Bevorzugt ist durch einen verringerten Ausgangsstrom der Energieversorgungseinheit, insbesondere der Stromquelle, während dieser Kommutierungszeit die Spannung über allen in einem Blockbetrieb geschalteten Schalter unter deren kritischer Schwelle. Bevorzugt ist der Ausgangsstrom durch die Reglereinheit einstellbar, wobei die Reglereinheit vorteilhafterweise über eine Störgrößenaufschaltung verfügt.

Der Leistungsbedarf an die gemeinsame Energieversorgungseinheit kann sich zwischen den einzelnen Betriebszuständen der Lichtquellen, welche sich abhängig von der zur erzeugenden Farbsequenz situationsabhängig ändern kann, ändern.

Bei gleichzeitigem Betrieb von mehreren der Lichtquellen kann vorgesehen sein, dass die Reglereinheit die Energieversorgungseinheit, insbesondere die Stromquelle, dahingehend ausregelt, exakt diejenige Leistung abzugeben, die die Summe der Lichtquellen benötigt. Es kann vorgesehen sein, dass sich die Reglereinheit während den kurzen Kommutierungsintervallen auf die im nachfolgenden Betriebszustand zu erwartende Leistungsanforderung präventiv einstellt, bevorzugt derart, dass sich dadurch die Einschwingzeit des gesamten Systems verkürzt. Ebenso kann vorgesehen sein, dass die Reglereinheit derart ausgebildet ist, dass sie unmittelbar nach den Kommutierungsintervallen durch eine dynamische Sollwerteinstellung die Einschwingamplitude des Systems verkleinert.

Vorzugsweise ist zumindest eine Lichtquelle als Leuchtdiode ausgebildet. Erfindungsgemäß ist vorgesehen, dass alle Lichtquellen des Beleuchtungssystems als Leuchtdioden ausgebildet sind, wobei jede der Leuchtdioden zur Erzeugung von Lichtsignalen einer individuellen Farbe ausgebildet sind. Es kann auch vorgesehen sein, dass zumindest zwei derartige Leuchtdioden in einem Signalpfad in Reihe geschaltet sind, und beide zur Erzeugung von Lichtsignalen einer Lichtfarbe ausgebildet sind. Dadurch können Ketten von Leuchtdioden ausgebildet werden, wobei jede Kette in sich einfarbig ist.

Es kann auch vorgesehen sein, dass die Strahlungsstärke der Leuchtdioden eine Eingangsgröße für die Reglereinheit ist.

Bevorzugt ist das Beleuchtungssystem als Bildprojektionssystem ausgebildet, wobei die Lichtquellen dann derart angeordnet sind, dass sie zur Beleuchtung einer Bildanzeigevorrichtung, insbesondere eines Displays, angeordnet sind.

Bei einem Verfahren zum Betreiben eines Beleuchtungssystems mit einer ersten Lichtquelle und zumindest einer zweiten Lichtquelle, welche zur Erzeugung von Lichtsignalen unterschiedlicher Farben ausgebildet sind, werden die Lichtquellen zum Erzeugen einer vorgebbaren Farbsequenz entsprechend angesteuert. Ein wesentlicher Gedanke besteht darin, dass die Lichtquellen durch eine gemeinsame Steuereinheit betrieben werden und durch diese Steuereinheit in der für die Erzeugung der vorgebbaren Farbsequenz erforderlichen Folge, insbesondere in der erforderlichen Reihenfolge, angesteuert werden. Das Verfahren ermöglicht ein aufwandsarmes und dennoch präzises Erzeugen von auch sehr komplexen Farbsequenzen.

### Kurze Beschreibung der Zeichnung

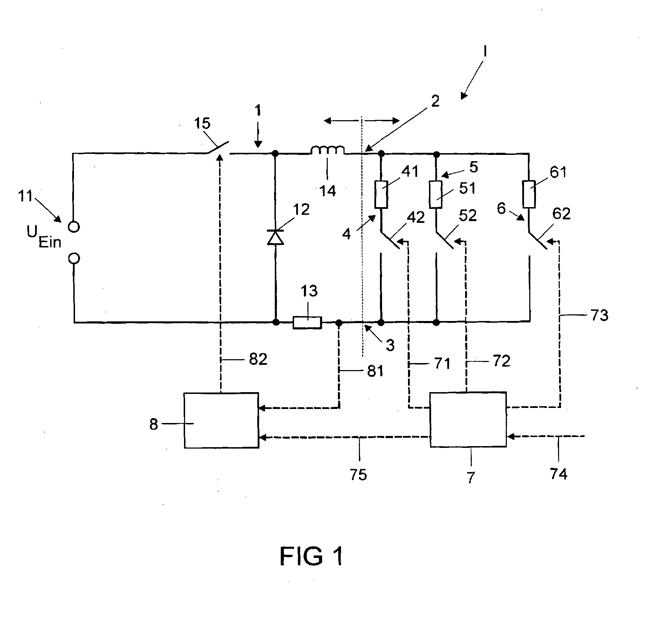

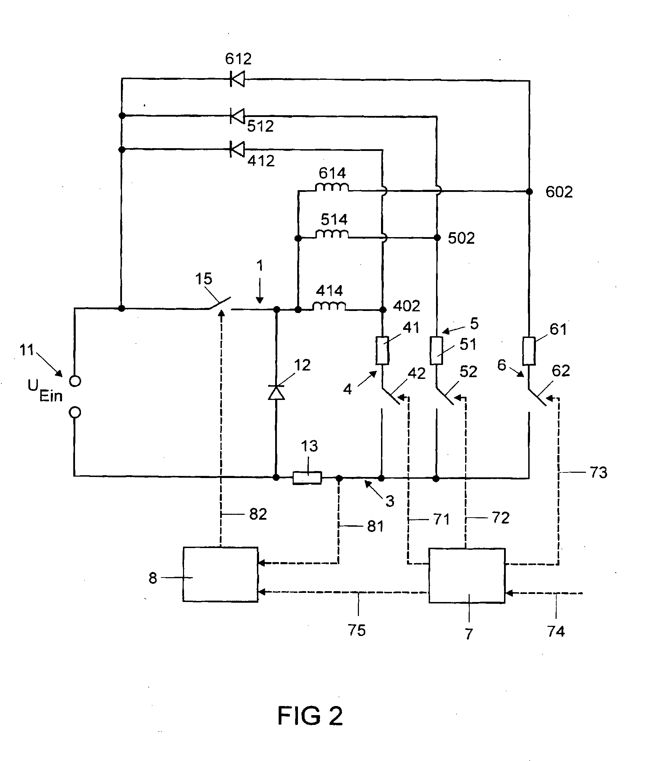

Im Nachfolgenden werden zwei Ausführungsbeispiele der vorliegenden Erfindung anhand von schematischen Zeichnungen näher erläutert. Die Figuren 1 und 2 zeigen Schaltungsanordnungen eines Bildprojektionssystems.

### Bevorzugte Ausführung der Erfindung

In der schematischen Darstellung gemäß Figur 1 ist eine bekannte Schaltungsanordnung eines Beleuchtungssystems gezeigt, welches als Bildprojektionssystems I ausgebildet ist. Das Bildprojektionssystem I umfasst als Energieversorgungseinheit eine Stromquelle 1, welche eine Spannungsquelle 11 sowie eine Diode 12, einen Shunt 13 und eine Induktivität 14 aufweist. Darüber hinaus umfasst die Stromquelle 1 einen Schalter 15. Die dargestellte Schaltungsanordnung des Bildprojektionssystems I umfasst einen ersten Schaltungsknoten 2 und einen zweiten Schaltungsknoten 3. Darüber hinaus umfasst das Bildprojektionssystem I eine Bildanzeigevorrichtung (nicht dargestellt), welche über eine Mehrzahl von Lichtquellen zur Darstellung einer Farbsequenz beleuchtbar ist.

Dazu weist das Beleuchtungssystem bzw. das Bildprojektionssystem I im Ausführungsbeispiel eine Mehrzahl an parallel geschalteten Lichtquellen 41, 51 und 61 auf. Die als Lasten ausgebildeten Lichtquellen 41, 51 und 61 sind im Ausführungsbeispiel als Leuchtdioden realisiert, wobei die Lichtquelle 41 zur Erzeugung von Lichtsignalen grüner Lichtfarbe, die zweite Lichtquelle 51 zur Erzeugung von Lichtsignalen roter Lichtfarbe und die dritte Lichtquelle 61 zur Erzeugung von Lichtsignalen blauer Lichtfarbe ausgebildet ist.

Wie aus der Darstellung in Figur 1 zu erkennen ist, ist die erste Lichtquelle 41 in einen Signalpfad 4 geschaltet, in welchem in Reihe zur Lichtquelle 41 ein Schalter 42 geschaltet ist. Entsprechend ist die zweite Lichtquelle 51 in einem parallelen Signalpfad 5 geschaltet, wobei die zweite Lichtquelle 51 in Reihe zu einem zweiten Schalter 52 geschaltet ist. Analog dazu ist in einem dritten Signalpfad 6 die dritte Lichtquelle 61 in Reihe zu einem Schalter 62 geschaltet. Die drei Signalpfade 4, 5 und 6 sind parallel zueinander geschaltet, wobei die Lichtquellen 41, 51 und 61 zur Energieversorgung durch die Stromquelle 1 mit dem ersten Schaltungsknoten 2 verbunden sind.

Die drei Schalter 42, 52 und 62 sind zur Rückführung des Stroms zur Stromquelle 1 mit dem zweiten Schaltungsknoten 3 verbunden.

Darüber hinaus umfasst die gezeigte Schaltungsanordnung bzw. das Bildprojektionssystem I eine Steuereinheit 7, welche zur Steuerung aller drei Schalter 42, 52 und 62 und somit auch zur Steuerung des Betriebszustands der Lichtquellen 41, 51 und 61 ausgebildet ist. Die Schalter 42, 52 und 62 werden dabei durch die Steuereinheit 7 derart geöffnet und geschlossen, dass situationsabhängig die zur Erzeugung der vorgebbaren Farbsequenz erforderlichen Lichtquellen 41, 51 und 61 betrieben werden. Dazu ist die eine gemeinsame Steuereinheit 7 über separate Signalverbindungen 71, 72 und 73 mit den jeweiligen Schaltern 42, 52 und 62 kontaktiert.

Wie Figur 1 des Weiteren zeigt, ist eine weitere Signalverbindung 74 ausgebildet, welche eine Schnittstelle zur Synchronisation des Mikroprozessors bzw. der Steuereinheit 7 mit weiteren Komponenten des Bildprojektionssystems I darstellt.

Im Hinblick auf die situationsabhängige erforderliche Energiebereitstellung durch die Stromquelle 1 umfasst das Bildprojektionssystem I in der gezeigten Schaltungsanordnung auch eine Reglereinheit 8, welche mit der Steuereinheit 7 elektrisch verbunden ist, wobei dazu über eine Signalverbindung 75 eine Sollwertvorgabe sowie die Vorgabe einer Schaltfrequenz von der Steuereinheit 7 an die Reglereinheit 8 übertragen werden kann. Abhängig von diesen vorgebbaren Parametern kann die Reglereinheit 8 über eine Signalverbindung 82 den Schalter 15 der Stromquelle 1 entsprechend regeln. Darüber hinaus kann über eine Signalverbindung 81 eine Strommessung erfolgen, welche als Information der Reglereinheit 8 bereitgestellt werden kann. Abhängig von diesen Vorgaben und Informationen kann dann situationsabhängig die Energiebereitstellung durch die Stromquelle 1 mittels der Reglereinheit 8 geregelt werden und eine individuell erforderliche Energieabgabe, insbesondere eine individuelle und situationsabhängige Stromversorgung der Lichtquellen 41, 51 und 61, gewährleistet werden.

Abhängig von der momentan erforderlichen Lichtintensität und Lichtzusammensetzung kann dann zumindest eine der Lichtquellen 41, 51 und 61 betrieben werden, indem die entsprechenden Schalter 42, 52 und 62 über die gemeinsame Steuereinheit 7 geöffnet oder geschlossen werden. In aufwandsarmer und bauteilreduzierter Weise kann dadurch mittels dem Bildprojektionssystem I die Darstellung von verschiedensten Farbsequenzen ermöglicht werden. Die dazu erforderliche Reihenfolge der zu betreibenden Lichtquellen 41, 51 und 61 kann durch ein einziges Betriebsgerät bzw. durch eine einzige Steuereinheit 7 durchgeführt werden.

In Figur 2 ist eine erfindungsgemäße Schaltungsanordnung eines Beleuchtungssystems dargestellt, mit der ein gleichzeitiger Betrieb von zwei oder mehr Lichtquellen 41, 51, 61 mit frei wählbaren Effektivströmen möglich ist. Die Schaltungsanordnung gemäß Figur 1 bietet diese Möglichkeit nicht.

Im Unterschied zu Figur 1 weist nun die Energieversorgungseinheit 1 für jede Lichtquelle 41, 51, 61 jeweils eine Drossel 414, 514, 614 auf. Jede Lichtquelle 41, 51, 61 ist über jeweils einen eigenen Ausgangsknoten 402, 502, 602 mit der jeweiligen Drossel 414, 514, 614 verbunden. Wie in Figur 1 weist die Energieversorgungseinheit 1 eine Eingangsklemme 11 auf, an der eine Spannungsquelle bezüglich eines Bezugspotenzials einspeisbar ist. Zwischen die Ausgangsknoten 402, 502, 602 und der Eingangsklemme 11 ist jeweils eine Freilaufdiode 412, 512, 612 geschaltet.

Durch die Steuereinheit 7 können nun die Schalter 42, 52, 62 durch jeweils ein PWM Signal angesteuert werden. Entsprechend einem Tastverhältnis des jeweiligen PWM-Signals kann der Effektivstrom der jeweiligen Lichtquelle 41, 51, 61 eingestellt werden. Den maximal möglichen Strom stellt die Reglereinheit 8 über den Schalter 15 ein.

Vorteilhaft können die Schaltvorgänge der Schalter 42, 52 und 62 mit dem Schalten des Schalters 15 synchronisiert werden. Werden die Schalter 42, 52 und 62 nur dann geöffnet, wenn auch der Schalter 15 geöffnet ist, so arbeitet der Entmagnetisierungsstrom der über die Dioden 412, 512 und 612 fließt gegen die Eingangsspannung an der Eingangsklemme 11. Dadurch werden die Drosseln 414, 514, und 614 schneller entmagnetisiert und die Lichtquellen 41, 51 und 61 können schneller ausgeschaltet werden.

## Patentansprüche

1. Beleuchtungssystem mit einer ersten Lichtquelle (41, 51, 61), welche zur Erzeugung von Lichtsignalen einer ersten Farbe ausgebildet ist, und zumindest einer zweiten Lichtquelle (41, 51, 61), welche zur Erzeugung von Lichtsignalen einer zweiten Farbe ausgebildet ist, wobei die Lichtquellen jeweils in parallel zueinander geschalteten Signalpfaden geschaltet sind, und zumindest eine Lichtquelle in dem entsprechenden Signalpfad in Reihe zu einem Schalter geschaltet ist;
- einer gemeinsamen Steuereinheit (7) die ausgebildet ist, die Lichtquellen zu betreiben und in einer für die Erzeugung einer vorgebbaren Farbsequenz von individuellen Farben erforderlichen Folge anzusteuern, wobei die gemeinsame Steuereinheit (7) ausgebildet ist, die Schalter in den entsprechenden Signalpfaden der Lichtquellen zum Öffnen oder Schließen anzusteuern;
- einer Energieversorgungseinheit (1) zur Energieversorgung der Lichtquellen, wobei die Lichtquellen über einen ersten Schaltungsknoten (2) zur Energieversorgung mit der Energieversorgungseinheit (1) elektrisch verbunden sind und wobei die Energieversorgungseinheit (1) eine Stromquelle ist;
- einer Reglereinheit (8) zur Regelung der Energieversorgungseinheit (1); **dadurch gekennzeichnet, dass**
- -- die Reglereinheit (8) mit der gemeinsamen Steuereinheit (7) über eine Signalleitung (75) verbunden ist, wobei die Steuereinheit (7) so ausgebildet ist, dass sie über die Reglereinheit (8) eine Soll-Energieabgabe der Energieversorgungseinheit (1) vorgibt und zwar abhängig von der individuellen Farbe innerhalb der Farbsequenz,
- -- die Energieversorgungseinheit (1) ein Tiefsetzsteller ist,
- -- die Energieversorgungseinheit (1) für jede Lichtquelle jeweils eine Drossel (414, 514, 614) aufweist, wobei jede Lichtquelle über jeweils einen Ausgangsknoten (402, 502, 602) mit der jeweiligen Drossel verbunden ist,
- -- die Energieversorgungseinheit (1) eine Eingangsklemme (11) aufweist, an der eine Spannungsquelle bezüglich eines Bezugspotenzials einspeisbar ist, wobei zwischen die Ausgangsknoten und der Eingangsklemme jeweils eine Freilaufdiode (412, 512, 612) geschaltet ist.

2. Beleuchtungssystem nach Anspruch 1,
**dadurch gekennzeichnet, dass**
die Steuereinheit (7) zur Vorgabe einer Schaltfrequenz der Energieversorgungseinheit (1) an die Reglereinheit (8) ausgebildet ist.

3. Beleuchtungssystem nach Anspruch 1 oder 2,
**dadurch gekennzeichnet, dass**
die Schalter (42, 52, 62) mit einem zweiten Schaltungsknoten (3) verbunden sind und zwischen dem ersten und dem zweiten Schaltungsknoten (2, 3) ein Filterkondensator geschaltet ist.

4. Beleuchtungssystem nach Anspruch 3,
wobei ein Maximalstrom Imax durch den Strom definiert ist, den die Energieversorgungseinheit (1) abgibt, wenn alle Schalter (42, 52, 62) geschlossen sind und das Beleuchtungssystem eine für das Beleuchtungssystem spezifizierte maximale Lichtstärke erzeugt,
**dadurch gekennzeichnet, dass**
der durch den Maximalstrom Imax vorgegebene obere Grenzwert des Kapazitätswertes des Filterkondensators gemessen in Mikrofarad kleiner ist als der Wert des Maximalstroms gemessen in Ampere.

5. Beleuchtungssystem nach einem der Ansprüche 1 oder 2,
**dadurch gekennzeichnet, dass**
die Energieversorgungseinheit (1) ein Tiefsetzsteller ohne Ausgangs-Filterkondensator ist.

6. Beleuchtungssystem nach einem der vorhergehenden Ansprüche,
**dadurch gekennzeichnet, dass**
alle Verbindungsknoten zwischen den Lichtquellen (41, 51, 61) und den zugeordneten Schaltern (42, 52, 62) durch ein symmetrisches oder asymmetrisches Netzwerk aus Kondensatoren verbunden sind.

7. Beleuchtungssystem nach einem der vorhergehenden Ansprüche,
**dadurch gekennzeichnet, dass**
bei einem gleichzeitigen Betrieb von zwei oder mehr Lichtquellen (41, 51, 61) frei wählbare Effektivströme in den gleichzeitig betriebenen Lichtquellen (41, 51, 61) einstellbar sind und zwar dadurch, dass die Steuereinheit (7) derart ausgebildet ist, dass sie die Schalter (42, 52, 62) durch jeweils ein PWM Signal ansteuert.

8. Beleuchtungssystem nach einem der vorhergehenden Ansprüche,
**dadurch gekennzeichnet, dass**
zumindest eine Lichtquelle als Leuchtdiode (41, 51, 61) ausgebildet ist.

9. Beleuchtungssystem nach einem der vorhergehenden Ansprüche, welches als Bildprojektionssystem ausgebildet ist.

## Claims

1. Lighting system with
a first light source (41, 51, 61), which is designed to generate light signals of a first color, and at least one second light source (41, 51, 61), which is designed to generate light signals of a second color, the light sources each being connected into signal paths which are connected in parallel with one another, and at least one light source in the corresponding signal path being connected in series with a switch;
- a common control unit (7) which is designed to operate the light sources and to drive said light sources in a sequence required for generating a predeterminable color sequence of individual colors, the common control unit (7) being designed to drive the switches in the corresponding signal paths of the light sources so as to open or close;
- an energy supply unit (1) for supplying energy to the light sources, the light sources being electrically connected to the energy supply unit (1) via a first circuit node (2) for the supply of energy, and the energy supply unit (1) being a current source;
- a regulator unit (8) for regulating the energy supply unit (1) ;
**characterized in that**
- the regulator unit (8) is connected to the common control unit (7) via a signal line (75), the control unit (7) being designed in such a way that it predetermines a desired energy output of the energy supply unit (1) via the regulator unit (8), to be precise depending on the individual color within the color sequence
- -- the energy supply unit (1) is a step-down converter,
- -- the energy supply unit (1) has in each case one inductor (414, 514, 614) for each light source, each light source being connected to the respective inductor via in each case one output node (402, 502, 602),
- -- the energy supply unit (1) has an input terminal (11) at which a voltage source with respect to a reference potential can be fed in, in each case one freewheeling diode (412, 512, 612) being connected between the output nodes and the input terminal.

2. Lighting system according to Claim 1,
**characterized in that**
the control unit (7) is designed to predetermine a switching frequency of the energy supply unit (1) for the regulator unit (8).

3. Lighting system according to Claim 1 or 2,
**characterized in that**
the switches (42, 52, 62) are connected to a second circuit node (3), and a filter capacitor is connected between the first and the second circuit nodes (2, 3).

4. Lighting system according to Claim 3,
a maximum current Imax being defined by the current output by the energy supply unit (1) if all of the switches (42, 52, 62) are closed and the lighting system generates a maximum luminous intensity specified for the lighting system,
**characterized in that**
the upper limit value, predetermined by the maximum current Imax, of the capacitance value of the filter capacitor, measured in microfarads, is lower than the value of the maximum current, measured in amperes.

5. Lighting system according to either one of Claims 1 and 2, **characterized in that**
the energy supply unit (1) is a step-down converter without an output filter capacitor.

6. Lighting system according to one of the preceding claims, **characterized in that**
all of the connecting nodes between the light sources (41, 51,
61) and the associated switches (42, 52, 62) are connected by a symmetrical or asymmetrical network of capacitors.

7. Lighting system according to one of the preceding claims, **characterized in that**
in the case of simultaneous operation of two or more light sources (41, 51, 61), freely selectable rms currents can be set in the simultaneously operated light sources (41, 51, 61), to be precise by virtue of the fact that the control unit (7) is designed in such a way that it drives the switches (42, 52, 62) by in each case one PWM signal.

8. Lighting system according to one of the preceding claims, **characterized in that**
at least one light source is designed as a light emitting diode (41, 51, 61).

9. Lighting system according to one of the preceding claims, which is designed as an image projection system.

## Revendications

1. Système d'éclairage comprenant
- une première source lumineuse (41, 51, 61) qui est réalisée pour générer des signaux lumineux d'une première couleur, et au moins une deuxième source lumineuse (41, 51, 61) qui est réalisée pour générer des signaux lumineux d'une deuxième couleur, les sources lumineuses étant montées dans des trajets de signal connectés en parallèle les uns aux autres, et au moins une source lumineuse étant montée dans le trajet de signal correspondant en série avec un commutateur ;
- une unité de commande (7) commune, qui est réalisée pour faire fonctionner les sources lumineuses et les commander selon une succession nécessaire pour générer une séquence de couleurs prédéfinissable composée de couleurs individuelles, l'unité de commande (7) commune étant réalisée pour commander les commutateurs dans les trajets de signal correspondants des sources lumineuses pour qu'ils s'ouvrent ou se ferment ;
- une unité d'alimentation en énergie (1) pour alimenter en énergie les sources lumineuses, les sources lumineuses étant reliées électriquement à l'unité d'alimentation en énergie (1) via un premier noeud de circuit (2) pour assurer l'alimentation en énergie, et l'unité d'alimentation en énergie (1) étant une source de courant ;
- une unité de réglage (8) pour la régulation de l'unité d'alimentation en énergie (1) ;
**caractérisé en ce que**
- l'unité de réglage (8) est reliée à l'unité de commande (7) commune via une ligne de signal (75), l'unité de commande (7) étant réalisée de manière à prédéfinir par le biais de l'unité de réglage (8) une restitution d'énergie de consigne de l'unité d'alimentation en énergie (1), en fonction de la couleur individuelle à l'intérieur de la séquence de couleurs,
- l'unité d'alimentation en énergie (1) est un convertisseur abaisseur,
- l'unité d'alimentation en énergie (1) comporte pour chaque source lumineuse respectivement une inductance (414, 514, 614), chaque source lumineuse étant reliée à l'inductance correspondante via respectivement un noeud de sortie (402, 502, 602),
- l'unité d'alimentation en énergie (1) comporte une borne d'entrée (11) à laquelle peut être appliquée une source de tension par rapport à un potentiel de référence, entre les noeuds de sortie et la borne d'entrée étant connectée respectivement une diode de roue libre (412, 512, 612).

2. Système d'éclairage selon la revendication 1,
**caractérisé en ce que**
l'unité de commande (7) est réalisée pour prédéfinir une fréquence de commutation de l'unité d'alimentation en énergie (1) pour l'unité de réglage (8).

3. Système d'éclairage selon la revendication 1 ou 2,
**caractérisé en ce que**
les commutateurs (42, 52, 62) sont reliés à un deuxième noeud de circuit (3), et un condensateur de filtrage est monté entre le premier et le deuxième noeud de circuit (2, 3).

4. Système d'éclairage selon la revendication 3,
dans lequel un courant maximal Imax est défini par le courant que restitue l'unité d'alimentation en énergie (1) si tous les commutateurs (42, 52, 62) sont fermés et que le système d'éclairage produit une intensité lumineuse maximale spécifiée pour le système d'éclairage,
**caractérisé en ce que**
la limite supérieure prédéterminée par le courant maximal Imax de la valeur de la capacité du condensateur de filtrage mesurée en microfarad est inférieure à la valeur du courant maximal mesuré en ampère.

5. Système d'éclairage selon l'une des revendications 1 ou 2,
**caractérisé en ce que**
l'unité d'alimentation en énergie (1) est un convertisseur abaisseur sans condensateur de filtrage de sortie.

6. Système d'éclairage selon l'une des revendications précédentes,
**caractérisé en ce que**
tous les noeuds de liaison entre les sources lumineuses (41, 51, 61) et les commutateurs (42, 52, 62) associés sont reliés par un réseau symétrique ou asymétrique de condensateurs.

7. Système d'éclairage selon l'une des revendications précédentes,
**caractérisé en ce que**
lors d'un fonctionnement simultané de deux sources lumineuses ou plus (41, 51, 61), il est possible de régler dans les sources lumineuses (41, 51, 61) fonctionnant simultanément des courants efficaces pouvant être choisis librement, grâce au fait que l'unité de commande (7) est réalisée de manière à commander les commutateurs (42, 52, 62) par respectivement un signal PWM.

8. Système d'éclairage selon l'une des revendications précédentes,
**caractérisé en ce que**
au moins une source lumineuse est réalisée sous forme de diode électroluminescente (41, 51, 61).

9. Système d'éclairage selon l'une des revendications précédentes, qui est réalisé sous forme de système de projection d'image.
